# EUROPÄISCHE PATENTSCHRIFT

(11) **EP 3 049 910 B1**
(45) Veröffentlichungstag und Bekanntmachung des Hinweises auf die Patenterteilung: **29.04.2020**
(21) Anmeldenummer: 13771115.6
(22) Anmeldetag: 27.09.2013
(51) Int. Cl.: G06F 3/16

(54) **ANWENDERSCHNITTSTELLE UND VERFAHREN ZUR UNTERSTÜTZUNG EINES ANWENDERS BEI DER BEDIENUNG EINER BEDIENEINHEIT**
USER INTERFACE AND METHOD FOR ASSISTING A USER WHEN OPERATING AN OPERATING UNIT
INTERFACE D'UTILISATEUR ET PROCÉDÉ D'ASSISTANCE D'UN UTILISATEUR LORS DE L'ACTIONNEMENT D'UNE UNITÉ DE COMMANDE

(43) Veröffentlichungstag der Anmeldung: 03.08.2016
(73) Patentinhaber: Volkswagen Aktiengesellschaft, 38440 Wolfsburg (DE)
(72) Erfinder: WILD, Holger, 10179 Berlin (DE); CZELNIK, Mark Peter, 38440 Wolfsburg (DE); SEITZ, Gordon, 38468 Ehra-Lessien (DE)
(86) Internationale Anmeldenummer: PCT/EP2013/070217
(87) Internationale Veröffentlichungsnummer: WO 2015/043655

(56) Entgegenhaltungen:
- WO-A1-2013/113340
- DE-A1-102007 039 450
- DE-A1-102007 039 450
- US-A1- 2006 022 955
- US-A1- 2009 225 043

## Beschreibung

### Stand der Technik

Die vorliegende Erfindung betrifft eine Anwenderschnittstelle sowie ein Verfahren zur Unterstützung eines Anwenders bei der Bewegung einer berührungsempfindlichen Bedieneinheit. Insbesondere betrifft die vorliegende Erfindung die Unterstützung eines Fahrers eines Fortbewegungsmittels beim Bedienen einer fortbewegungsmittel-basierten Bedieneinheit während des Führens des Fortbewegungsmittels.

Im Stand der Technik sind Betriebssysteme für Bedieneinheiten bekannt, welche Bildschirminhalte verwenden, bei welchen Informations-/Schalteinheiten (auch "Icons" oder "Kacheln" genannt) zum Starten einer zugeordneten Funktion nebeneinander dargestellt werden. Diese Kacheln können mitunter im Ansprechen auf einen Anwenderwunsch neu zueinander angeordnet werden. Beispiele für gattungsgemäße Betriebssysteme sind Windows 8 (eingetragene Marke) sowie das Airview (eingetragene Marke) des Samsung Galaxy S4 (eingetragene Marke). Überdies ist es üblich, dass (z.B. beim Verwenden eines Internetbrowsers) Mouse-Klicks mit einem akustischen Quittierton ("Klick") quittiert werden. Bei der Bedienung von Bedieneinheiten von Fortbewegungsmitteln und Smartphones haben sich hingegen neben tastenbasierten Eingabeeinheiten auch sog. "Touch-Screens" (berührungsempfindlicher Bildschirm) durchgesetzt.

WO 2009/062677 A2 offenbart eine multimodale Benutzerschnittstelle eines Fahrerinformationssystems zur Eingabe und Präsentation von Informationen, bei welcher ein Verweilen eines Fingers eines Anwenders in einem Bereich vor einem vordefinierten Bildschirmbereich zum Auslösen einer Funktion der Benutzerschnittstelle führt. Hierbei wird, ohne dass der Anwender in Kontakt mit der Bedieneinheit steht, die Präsenz des Fingers erkannt und mitunter sogar einem konkreten Bildschirminhalt zugeordnet, so dass eine kontextspezifische Funktion durch diesen auch als "Hovern" bezeichneten Bedienschritt gestartet wird.

DE 10 2007 039 450 A1 offenbart einen berührungsempfindlichen Bildschirm, bei welchem im Ansprechen auf das Unterschreiten eines vorbestimmten Abstandes zwischen einem Eingabemittel (z.B. ein Finger oder ein Eingabestift) und einer Schaltfläche ein akustisches Feedback ausgegeben wird.

US 2006/022955 A1 offenbart ein Verfahren zum Bedienen einer berührungsempfindlichen Anzeige, bei welchem ein Verweilen auf einer Schaltfläche für eine vordefinierte Mindestdauer zum Vergrößern eines unter dem Finger befindlichen Bereiches führt. Ein akustisches Feedback ist dazu vorgesehen, dem Anwender eine Information darüber auszugeben, ob er sich über dem beabsichtigten Anzeigebereich befindet.

US 2009/225043 A1 offenbart eine Eingabeeinrichtung mit Annäherungserkennung. Die Tatsache, dass die Finger oder die Hand in der Nähe zu einem bestimmten berührungssensitiven Sensor verweilt, führt zum Ausgeben eines akustischen Feedbacks an den Anwender.

Insbesondere während des Wahrnehmens der Fahraufgabe durch den Anwender und bei unebener Fahrbahn ist eine Eingabe durch Hovern jedoch gewöhnungsbedürftig, da der Blick des Anwenders hauptsächlich auf das Straßengeschehen gerichtet ist und die Fahrbahnunebenheiten zu unbeabsichtigten Relativbewegungen zwischen der Hand des Anwenders und der Bedieneinheit führen können.

Es ist daher eine Aufgabe der vorliegenden Erfindung, einen Anwender beim Hovern vor einer Bedieneinheit zu unterstützen.

### Offenbarung der Erfindung

Die vorstehend genannte Aufgabe wird erfindungsgemäß durch ein Verfahren mit den Merkmalen gemäß Anspruch 1 sowie durch eine Anwenderschnittstelle mit den Merkmalen gemäß Anspruch 7 gelöst. gelöst, wobei die Unteransprüche bevorzugte Weiterbildungen der Erfindung zeigen. Das erfindungsgemäße Verfahren dient der Unterstützung eines Anwenders bei der Bedienung einer berührungsempfindlichen Bedieneinheit und umfasst den Schritt eines Erkennens einer Präsenz eines Eingabemittels in einem vordefinierten ersten Bereich vor der Bedieneinheit. Dabei kann das Eingabemittel beispielsweise der Finger eines Anwenders, ein Zeigestab ("Stylus") o.ä. sein. Im Rahmen der vorliegenden Erfindung unter der Formulierung "vor der Bedieneinheit" wird im Unterschied zu einer Formulierung "auf der Bedieneinheit" ein Bereich verstanden, der nicht in Kontakt mit einer Oberfläche der Bedieneinheit steht. Sofern die Präsenz des Eingabemittels in diesem ersten Bereich erkannt wird, kann der Bedienschritt daher als ein "Hovern" (schwebende Bedienung) bezeichnet werden. Erfindungsgemäß wird im Ansprechen auf das Erkennen der Präsenz des Eingabemittels eine erste vordefinierte Audioausgabe als Quittierung ausgegeben. Mit anderen Worten wird bei Erkennen des Hoverns ein über Schallwandler wiedergegebenes Audiosignal ausgegeben, welche dem Anwender signalisiert, dass das Eingabemittel den ersten vordefinierten Bereich vor der Bedieneinheit erreicht hat. Durch das Hovern wird somit eine zusätzliche Eingabemöglichkeit generiert, welche keine Verunreinigung der Bedieneinheit durch Fingerabdrücke bedingt. Der erfindungsgemäße Quittierton gibt dabei dem Anwender eine Rückmeldung, dass sein Eingabemittel in den Erkennungsbereich der Bedieneinheit eingetreten ist. Auf diese Weise kann er sein Augenmerk auf das Verkehrsgeschehen gerichtet belassen, was zur Erhöhung der Verkehrssicherheit beiträgt.

Bevorzugt weist der vordefinierte erste Bereich einen Abstand von der Bedieneinheit auf, welcher größer als 0 mm, größer als 1 mm oder gar größer als 2 mm ist. Mit anderen Worten wird eine mit dem Hovern assoziierte Eingabe lediglich dann ausgeführt, wenn das Eingabemittel die Bedieneinheit nicht berührt. Dies unterscheidet berührende Eingaben ("Touch-Vorgang") klar von einem Hovern.

Der erste Bereich kann sich senkrecht zur Oberfläche der Bedieneinheit zwischen 0 mm und einem vordefinierten Maximalabstand befinden und parallel zur Oberfläche der Bedieneinheit im Wesentlichen entsprechend einer auf der Bedieneinheit dargestellten Schaltfläche befinden. Eine Präsenz des Eingabemittels kann zusätzlich bzw. grundsätzlich auch dann erkannt werden, wenn in dem vorstehend definierten Abstandsbereich das Eingabemittel vor der Bedieneinheit (ungeachtet einer bestimmten Schaltfläche) angeordnet ist. Auf diese Weise wird eine generelle Präsenz des Eingabemittels innerhalb des Hover-Bereiches ebenso signalisierbar wie die Präsenz innerhalb eines Hover-Bereiches einer dargestellten Schaltfläche. Selbstverständlich können für die Audio-Ausgabe in Abhängigkeit des jeweiligen Hover-Bereiches unterschiedliche Signale, insbesondere unterschiedliche Frequenzen verwendet werden, um die Orientierung für den Anwender zu erleichtern. Die Audio-Ausgabe kann zudem eine Sprachausgabe umfassen, mittels welcher auf der Bedieneinheit dargestellte Informationen oder mit diesen verwandte Informationen auralisiert werden.

Das Verfahren kann weiter ein Erkennen eines Übertritts des Eingabemittels von dem ersten Bereich in einen vordefinierten zweiten Bereich vor der Bedieneinheit umfassen. Mit anderen Worten ist es nicht erforderlich, dass für die Audio-Ausgabe das Eingabemittel vor der Präsenz innerhalb des ersten vordefinierten Bereiches außerhalb des Hover-Bereiches der erfindungsgemäßen Bedieneinheit angeordnet war. Das Quittieren einer erkannten Präsenz durch eine vordefinierte erste Audio-Ausgabe ergibt sich somit alternativ oder zusätzlich als ein Quittieren eines erkannten Übertritts in Form einer vordefinierten zweiten Audio-Ausgabe. Die zweite Audio-Ausgabe kann sich von der ersten Audio-Ausgabe unterscheiden oder mit dieser identisch sein. Je nach Anwendungsfall kann somit der Informationsgehalt der Audio-Ausgabe erhöht oder der Einfachheit halber ein einheitlicher Quittierton vorgesehen werden.

Bevorzugt kann auch ein vordefiniertes Bewegungsmuster des Eingabemittels in dem ersten Bereich erkannt werden und im Ansprechen darauf das vordefinierte Bewegungsmuster durch eine dem vordefinierten Bewegungsmuster zugeordnete dritte Audio-Ausgabe quittiert werden. Als vordefinierte Bewegungsmuster können beispielsweise eine Tipp-Bewegung, eine Zoom-Bewegung (Spreizen der Finger), eine Wisch-Bewegung, o.ä. vordefiniert und wiedererkannt werden. Werden den vordefinierten Bewegungsmustern entsprechende Audio-Ausgaben zugeordnet, kann der Anwender ohne einen Blick auf die Bedieneinheit feststellen, dass das Bewegungsmuster korrekt erkannt worden ist. Auf diese Weise erübrigt sich eine optische Überprüfung der Bedienhandlung, wodurch der Fahrer sich besser seiner Fahraufgaben widmen kann.

In Abhängigkeit der Bedienhandlung sowie in Abhängigkeit der auf der Bedieneinheit dargestellten Schaltfläche, vor welcher das Hovern erkannt wird, können unterschiedliche Audio-Ausgaben, beispielsweise aus einer der folgenden Signalklassen, vorgesehen sein. Ein Klick-Geräusch einer ersten (höheren) Frequenz, ein Klick-Geräusch einer zweiten (niedrigeren) Frequenz oder ein jeweiliges Piep-Geräusch kann verwendet werden, um eine Präsenz des Eingabemittels vor der Bedieneinheit im allgemeinen oder vor einer auf ihr dargestellten Schaltfläche im Speziellen zu quittieren. Alternativ oder zusätzlich kann auch ein Erreichen eines Hover-Bereiches durch ein Audiosignal einer höheren Frequenz und ein Verlassen des Hover-Bereiches durch ein Audio-Signal einer tieferen Frequenz quittiert werden. Weiter kann beispielsweise in Abhängigkeit einer mit der Schaltfläche assoziierten Funktion ein Donner-Geräusch (als Sinnbild für eine gewittrige Wetterlage), ein Regengeräusch (als Sinnbild für einen heftigen Niederschlag) oder ein Windgeräusch (als Sinnbild für eine hohe Windstärke ohne Niederschlag) wiedergegeben werden, sobald das Eingabemittel eine Schaltfläche zur Wiedergabe von Wetterinformationen hovernd erreicht. Entsprechend kann beim Erreichen einer Schaltfläche für eine Telefoniefunktion eine DTMF-Tonfolge oder ein Freizeichen wiedergegeben werden, um den Anwender über die erreichte Telefonfunktion zu informieren. Alternativ kann eine medienbezogene Sprachausgabe erfolgen, mittels welcher z.B. der aktuell wiedergegebene oder pausierte Musiktitel gesprochen wird. Bezüglich einer Navigationsfunktion kann eine aktuelle Entfernung vom Ziel o.Ä. gesprochen werden. Im Kontext einer Fahrzeugdatenüberwachung kann beispielsweise der Füllstand des Energiespeichers (oder "Tank") angesagt werden. Eine kontextbezogene Audio-Ausgabe ermöglicht dabei eine Wiedergabe von Informationen, ohne dass der Anwender sein Augenmerk vom Verkehrsgeschehen abwenden muss. Dies erhöht die Verkehrssicherheit bei der Interaktion mit einer fahrzeugbasierten Bedieneinheit.

Zusätzlich zur Quittierung durch eine vordefinierte zugeordnete Audio-Ausgabe kann die erkannte Präsenz durch ein vordefiniertes alternatives optisches Darstellen einer auf der Bedieneinheit dargestellten Schaltfläche quittiert werden. Durch eine optische Rückmeldung (z.B. durch ein Aufblitzen eines Rahmens um die betroffene Schaltfläche, durch ein Invertieren der Farbgestaltung der Schaltfläche o.ä.) kann die Zuordnung der Audioausgabe zur Bedieninteraktion auch bei starken Störgeräuschen unterstützt werden.

Gemäß einem zweiten Aspekt wird eine Anwenderschnittstelle vorgeschlagen, welche beispielsweise als fest in einem Kraftfahrzeug verbaute Mensch-Maschine-Schnittstelle (HMI, human machine interface) ausgestaltet sein kann. HMIs weisen zumeist relativ zentral im Armaturenbrett von PKW angeordnete Anzeigeeinheiten auf, welche mitunter als berührungsempfindliche Bedieneinheiten ausgestaltet sind. Die erfindungsgemäße Anwenderschnittstelle umfasst neben einer solchen berührungsempfindlichen Bedieneinheit auch eine Erkennungseinrichtung zum Erkennen einer Anwendereingabe (bzw. einer Präsenz eines Eingabemittels in einem vordefinierten ersten Bereich vor der Bedieneinheit) und eine Verarbeitungseinrichtung. Diese Bestandteile versetzen die erfindungsgemäße Anwenderschnittstelle in die Lage, ein Verfahren auszuführen, wie es in Verbindung mit dem erstgenannten Aspekt beschrieben wurde. Die Merkmale, Merkmalskombinationen und die sich aus diesen ergebenden Vorteile entsprechen den in Verbindung mit dem erfindungsgemäßen Verfahren beschriebenen derart ersichtlich, dass zur Vermeidung von Wiederholungen auf die obigen Ausführungen verwiesen wird.

Bevorzugt ist die Erkennungseinrichtung der Anwenderschnittstelle mit einem Kamerasystem und/oder einem kapazitiven Sensor ausgestattet, mittels welcher eine Präsenz des Eingabemittels in dem vordefinierten ersten Bereich vor der Bedieneinheit erkannt werden kann.

Zusätzlich kann die erfindungsgemäße Anwenderschnittstelle Speichermittel umfassen, in welchem beispielsweise zur Erkennung vordefinierter Bewegungsmuster abgelegte Referenzen abgespeichert sind, welche durch die Verarbeitungseinrichtung bei der Ausführung des erfindungsgemäßen Verfahrens abgerufen und verwendet werden.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine schematische Übersicht über Bestandteile eines Ausführungsbeispiels einer erfindungsgemäßen Anwenderschnittstelle;
- Figur 2: eine Skizze zu einem Ausführungsbeispiel eines erfindungsgemäß erkennbaren vordefinierten Bewegungsmusters;
- Figur 3: eine Darstellung eines möglichen Bedienschrittes eines Ausführungsbeispiels einer erfindungsgemäßen Anwenderschnittstelle;
- Figur 4: eine Darstellung eines alternativen Bedienschrittes eines Ausführungsbeispiels einer erfindungsgemäßen Anwenderschnittstelle; und
- Figur 5: ein Flussdiagramm, veranschaulichend die Schritte eines Ausführungsbeispiels eines erfindungsgemäßen Verfahrens.

### Ausführungsformen der Erfindung

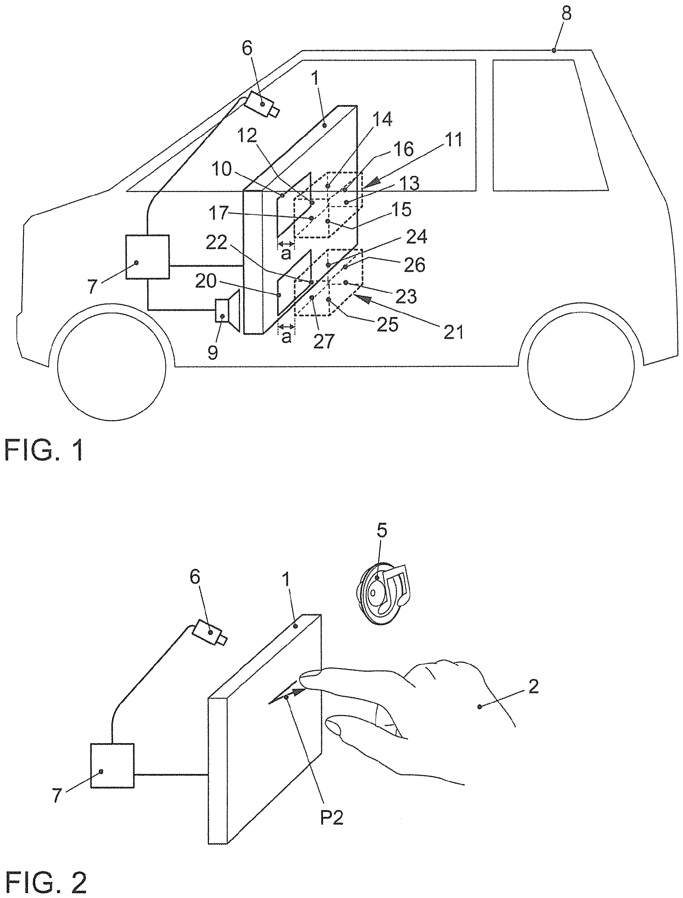

Figur 1 zeigt ein Fortbewegungsmittel 8, in welchem ein Bildschirm einer HMI als Bedieneinheit 1 in das Armaturenbrett eingelassen ist. Eine Kamera 6 ist als Erkennungseinrichtung im Bereich der Windschutzscheibe vorgesehen. Die Kamera 6 ist als Beispiel einer geeigneten (berührungslosen) Sensorik zur Erfassung der Distanz zwischen Bedieneinheit 1 und einem Eingabemittel mit einem elektronischen Steuergerät 7 als Verarbeitungseinrichtung datentechnisch verbunden. Weiter ist das elektronische Steuergerät 7 mit einem Lautsprecher 9 zur Erzeugung einer Audioausgabe sowie mit der Bedieneinheit 1 verbunden, auf deren Bildschirm eine erste Schaltfläche 10 und eine zweite Schaltfläche 20 dargestellt sind. In einem jeweiligen Abstand a zu den Schaltflächen 10, 20 sind jeweilige, quaderförmige Bereiche 11, 21, gestrichelt, in denen eine Präsenz eines Eingabemittels als Hovern erkannt wird. Die Bereiche 11, 21 sind durch eine erste, parallel zur Oberfläche der Bedieneinheit 1 orientierte Fläche 12 bzw. 22, eine zweite, parallel zur Oberfläche der Bedieneinheit 1 orientierte und weiter von der Oberfläche entfernte zweite Fläche 13 bzw. 23 und durch vier senkrecht zur Oberfläche der Bedieneinheit 1 orientierte Flächen 14 bzw. 24, 15 bzw. 25, 16 bzw. 26 und 17 bzw. 27 derart begrenzt, dass die Schaltflächen 10, 20 senkrechte Projektionen der Bereiche 11, 21 auf der Bedieneinheit 1 darstellen bzw. von diesen begrenzt sind.

Figur 2 zeigt einen Bedienschritt, welcher durch die Hand eines Anwenders 2 vor einer Bedieneinheit 1 ausgeführt wird. Dabei führt die Hand bzw. der Finger die durch Pfeil P2 ausgeführte Bewegung ohne Berührung der Bedieneinheit 1 durch. Der Pfeil ist als Annäherung in Verbindung mit einer anschließenden Entfernung des Fingers hinsichtlich der Bedieneinheit 1 zu beschreiben, was auch als Tipp-Geste bezeichnet werden könnte. Diese Tipp-Geste wird innerhalb des vordefinierten ersten Bereiches (in Figur 2 nicht dargestellt) ausgeführt und von der Kamera 6 erkannt. Im Ansprechen darauf veranlasst das elektronische Steuergerät 7 eine entsprechende Funktion und Änderung der Darstellung auf der Bedieneinheit 1. Erfindungsgemäß wird zusätzlich ein mit der Funktion assoziiertes Signal als Audio-Ausgabe 5 erzeugt, welches als akustisches Sinnbild ("Earcon") für die gestartete Funktion den Anwender über die erfolgreiche Eingabe informiert.

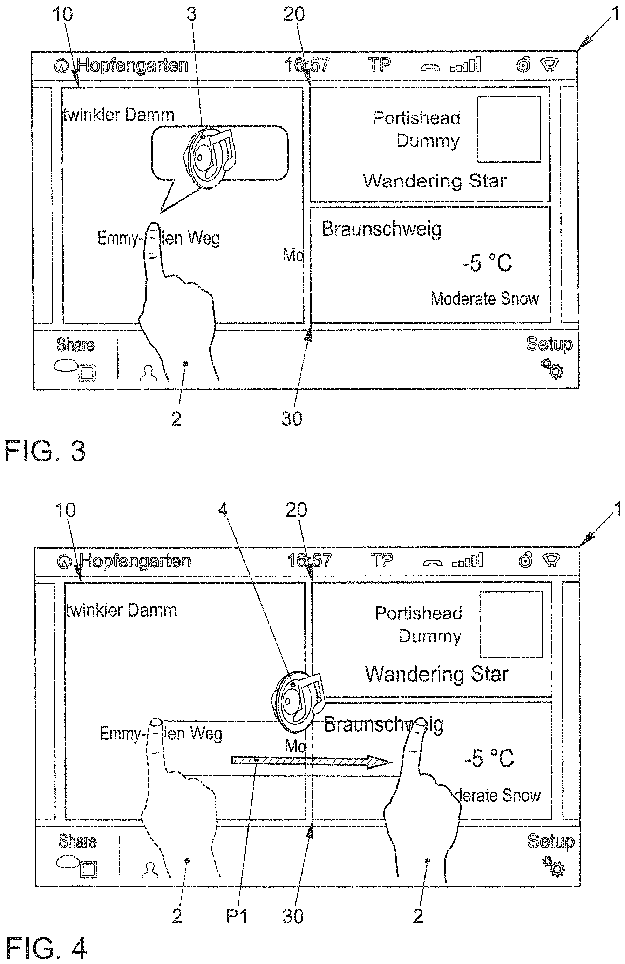

Figur 3 zeigt eine mögliche Bedienoberfläche, welche auf der Bedieneinheit 1 dargestellt werden kann. Auf einer ersten Schaltfläche 10 wird ein Kartenausschnitt dargestellt, welcher mit einem Teil einer durch ein Navigationssystem errechneten Route korrespondiert. Auf der rechten Bildschirmseite wird in einem oberen Bereich eine zweite Schaltfläche 20 dargestellt, über welche ein aktuell wiedergegebener Titel, dessen Interpret und das Album, auf welchem der Titel enthalten ist, wiedergegeben werden. Unterhalb der zweiten Schaltfläche 20 ist eine dritte Schaltfläche 30 dargestellt, in welchem das Wetter in Braunschweig in Form eines Icons in Verbindung mit einer Grad-Celsius-Angabe und einem aktuellen Niederschlag wiedergegeben wird. Die Hand eines Anwenders 2 befindet sich vor der ersten Schaltfläche 10. Über eine erste vordefinierte Audioausgabe 3 wird die Präsenz der Hand quittiert.

Figur 4 zeigt die in Verbindung mit Figur 3 dargestellte Ansicht, bei welcher jedoch eine alternative Geste mittels der Hand des Anwenders 2 ausgeführt wird. Dabei wechselt die Hand aus einem ersten Bereich 11 vor der ersten Schaltfläche 10 in einen dritten Bereich vor der dritten Schaltfläche 30. Der erkannte Übertritt wird durch eine vordefinierte zweite Audio-Ausgabe 4 quittiert. Zur Unterstützung des Anwenders korrespondiert die zweite Audio-Ausgabe 4 mit dem Inhalt der dritten Schaltfläche, indem eine Klangdatei abgespielt wird, welche ein Schneerieseln versinnbildlicht. Beispielsweise kann ein hochfrequentes leises Glockenspiel eine entsprechende Assoziation beim Anwender 2 hervorrufen.

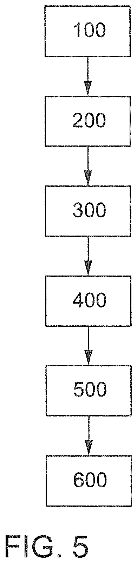

Figur 5 zeigt ein Flussdiagramm, veranschaulichend Verfahrensschritte eines Ausführungsbeispiels eines erfindungsgemäßen Verfahrens. In Schritt 100 wird die Präsenz eines Eingabemittels in einem vordefinierten ersten Bereich vor der Bedieneinheit erkannt. Im Ansprechen darauf wird im Schritt 200 die erkannte Präsenz durch eine vordefinierte erste Audio-Ausgabe quittiert. In Schritt 300 tritt das Eingabe-Mittel in einen zweiten vordefinierten Bereich vor der Bedieneinheit über, indem es den ersten vordefinierten Bereich verlässt. Dies wird im Schritt 400 durch eine vordefinierte zweite Audio-Ausgabe quittiert. Im zweiten Bereich vor der Bedieneinheit angekommen, führt der Anwender eine vordefinierte Geste als Bewegungsmuster aus, was in Schritt 500 durch die erfindungsgemäße Anwenderschnittstelle erkannt wird. Um den Anwender bei der Bedienung der erfindungsgemäßen Anwenderschnittstelle zu unterstützen, wird auch das vordefinierte Bewegungsmuster durch eine zugeordnete dritte Audio-Ausgabe quittiert.

Auch wenn die erfindungsgemäßen Aspekte und vorteilhaften Ausführungsformen anhand der in Verbindung mit den beigefügten Zeichnungsfiguren erläuterten Ausführungsbeispiele im Detail beschrieben worden sind, sind für den Fachmann Modifikationen und Kombinationen von Merkmalen der dargestellten Ausführungsbeispiele möglich, ohne den Bereich der vorliegenden Erfindung zu verlassen, deren Schutzbereich durch die beigefügten Ansprüche definiert wird.

### Bezugszeichenliste

- 1: Bedieneinheit
- 2: Eingabemittel eines Anwenders
- 3, 4, 5: Audio-Ausgaben
- 6: Kamera
- 7: elektronisches Steuergerät
- 8: Fahrzeug
- 10: Schaltfläche
- 11: erster Bereich
- 12, 13, 14, 15, 16, 17: Bereichsgrenzen
- 20: Schaltfläche
- 21: zweiter Bereich
- 22, 23, 24, 25, 26, 27: Bereichsgrenzen
- 100, 200, 300, 400, 500, 600: Verfahrensschritte
- P1, P2: Gesten
- a: Abstand

## Patentansprüche

1. Verfahren zur Unterstützung eines Anwenders bei der Bedienung einer berührungsempfindlichen Bedieneinheit (1), welche eingerichtet ist, vordefinierte Bewegungsmuster in Form einer Tipp-Bewegung und einer Zoom-Bewegung und einer Wisch-Bewegung jeweils als solche zu erkennen, wobei den vordefinierten Bewegungsmustem jeweilige voneinander unterschiedliche dritte Audio-Ausgaben zugeordnet sind, wobei das Verfahren die Schritte umfasst:
- Erkennen (100) einer Präsenz eines Eingabemittels (2), insbesondere eines Fingers des Anwenders, in einem vordefinierten ersten Bereich (11), welcher keinen Kontakt zur Bedieneinheit (1) aufweist, vor der Bedieneinheit (1), und im Ansprechen darauf
- Quittieren (200) der erkannten Präsenz durch eine vordefinierte erste Audioausgabe (3), wobei
- der erste Bereich (11) In Richtung parallel zu einer Oberfläche der Bedieneinheit (1) entsprechend einer auf der Bedieneinheit (1) dargestellten Schaltfläche (10, 20, 30) begrenzt ist, weiter umfassend die Schritte
- Erkennen (500) eines der vordefinierten Bewegungsmuster (P2) des Eingabemittels (2) als eine Tipp-Bewegung oder eine Zoom-Bewegung oder eine Wisch-Bewegung In dem ersten Bereich (11) und im Ansprechen darauf
- Quittieren (600) des vordefinierten Bewegungsmusters (P2) durch die dem vordefinierten Bewegungsmuster (P2) zugeordnete dritte Audioausgabe (5).

2. Verfahren nach Anspruch 1, wobei der vordefinierte erste Bereich (11) einen Abstand (a) von der Bedieneinheit (1) aufweist, welcher größer 1 mm, bevorzugt größer 2 mm, ist.

3. Verfahren nach einem der vorstehenden Ansprüche, weiter umfassend den Schritt
- Erkennen (300) eines Übertritts (P1) des Eingabemittels (2) von dem ersten Bereich (11) in einen vordefinierten zweiten Bereich (21) vor der Bedieneinheit (1), und
- Quittieren (400) des erkannten Übertritts (P1) durch eine vordefinierte zweite Audioausgabe (4).

4. Verfahren nach einem der vorstehenden Ansprüche, wobei die Audioausgabe (3, 4, 5) unter Verwendung eines Signales erfolgt, welches mit einer auf der Bedieneinheit (1) dargestellten Sinneinheit korrespondiert.

5. Verfahren nach einem der vorstehenden Ansprüche, wobei die Audioausgabe (3, 4, 5) eine der folgenden Signalklassen umfasst:
- Klick-Geräusch einer ersten Frequenz,
- Klick-Geräusch einer zweiten, niedrigeren Frequenz als die erste Frequenz,
- Piep-Geräusch
- Donnergeräusch,
- Regengeräusch,
- Windgeräusch,
- DTMF-Tonfolge,
- Freizeichen,
- Sprachausgaben.

6. Verfahren nach einem der vorstehenden Ansprüche, weiter umfassend den Schritt
- Quittieren (200) der erkannten Präsenz durch ein vordefiniertes alternatives optisches Darstellen einer auf der Bedieneinheit dargestellten Schaltfläche (10, 20, 30).

7. Anwenderschnittstelle, insbesondere fest in einem Kraftfahrzeug (8) verbaute Mensch-Maschine-Schnittstelle, umfassend:
- eine berührungsempfindliche Bedieneinheit (1),
- eine Erkennungseinrichtung (6) zum Erkennen einer Anwendereingabe, und
- eine Verarbeitungseinrichtung (7),
wobei die Anwenderschnittstelle eingerichtet ist, ein Verfahren nach einem der vorstehenden Ansprüche durchzuführen.

8. Anwenderschnittstelle nach Anspruch 7, wobei
- die Bedieneinheit (1) zentral im Armaturenbrett eines Kraftfahrzeugs (8) angeordnet ist, und/oder
- die Erkennungseinrichtung (6) ein Kamerasystem und/oder einen kapazitiven Sensor umfasst.

## Claims

1. A method for assisting a user with the operation of a touch-sensitive operating unit (1), which is designed to detect predefined movement patterns in the form of a tapping movement and a zoom movement and a swipe movement as such, the predefined movement patterns being associated with respective third audio outputs that are different from each other, the method comprising the following steps:
- detecting (100) a presence of an input means (2), in particular of a finger of the user, in a predefined first region (11), which has no contact with the operating unit (1), in front of the operating unit (1), and, in response thereto,
- acknowledging (200) the detected presence by way of a predefined first audio output (3), wherein
- the first region (11) is delimited in a direction parallel to a surface of the operating unit (1) corresponding to a button (10, 20, 30) displayed on the operating unit (1), further comprising the following steps:
- detecting (500) one of the predefined movement patterns (P2) of the input means (2) as a tapping movement or a zoom movement or a swipe movement in the first region (11), and, in response thereto,
- acknowledging (600) the predefined movement pattern (P2) by way of the third audio output (5) associated with the predefined movement pattern (P2).

2. The method according to Claim 1, wherein the predefined first region (11) is situated at a distance (a) from the operating unit (1) which is greater than 1 mm, preferably greater than 2 mm.

3. A method according to any one of the preceding claims, further comprising the following steps:
- detecting (300) a crossover (P1) of the input means (2) from the first region (11) into a predefined second region (21) in front of the operating unit (1), and
- acknowledging (400) the detected crossover (P1) by way of a predefined second audio output (4).

4. A method according to any one of the preceding claims, wherein the audio output (3, 4, 5) takes place using a signal which corresponds to a sensory unit represented on the operating unit (1).

5. A method according to any of the preceding claims, wherein the audio output (3, 4, 5) comprises one of the following signal classes:
- clicking sound having a first frequency;
- clicking sound having a second, lower frequency than the first frequency;
- beeping sound;
- sound of thunder;
- sound of rain;
- sound of wind
- DTMF tone sequence;,
- dial tone;
- voice outputs.

6. A method according to any one of the preceding claims, further comprising the following steps:
- acknowledging (200) the detected presence by way of a predefined alternative visual representation of a button (10, 20, 30) displayed on the operating unit.

7. A user interface, in particular a human/machine interface permanently installed in a motor vehicle (8), comprising:
- a touch-sensitive operating unit (1);
- a detection device (6) for detecting a user input; and
- a processing device (7),
wherein the user interface is designed to carry out a method according to any one of the preceding claims.

8. The user interface according to Claim 7, wherein
- the operating unit (1) is arranged centrally in the dashboard of a motor vehicle (8), and/or
- the detection device (6) comprises a camera system and/or a capacitive sensor.

## Revendications

1. Procédé d'assistance à un utilisateur lors de l'actionnement d'une unité d'utilisation (1) tactile, laquelle est conçue pour détecter comme tels des modèles de mouvement prédéfinis sous la forme d'un mouvement de tape et d'un mouvement de zoom et d'un mouvement de glissement, les modèles de mouvement prédéfinis étant associés à des troisièmes sorties audio respectives différentes, le procédé comprenant les étapes de :
- détection (100) d'une présence d'un moyen de saisie (2), en particulier d'un doigt de l'utilisateur, dans une première zone (11) prédéfinie, lequel ne présente aucun contact avec l'unité d'utilisation (1), devant l'unité d'utilisation (1) et, en réponse à cela
- acquittement (200) de la présence détectée par une première sortie audio (3) prédéfinie,
- la première zone (11) étant limitée dans une direction parallèle à une surface de l'unité d'utilisation (1) conformément à une touche (10, 20, 30) représentée sur l'unité d'utilisation (1), comprenant en outre les étapes de
- détection (500) d'un des modèles de mouvement (P2) prédéfinis du moyen de saisie (2) comme un mouvement de tape ou un mouvement de zoom ou un mouvement de glissement dans la première zone (11) et, en réponse à cela
- acquittement (600) du modèle de mouvement (P2) prédéfini par la troisième sortie audio (5) associée au modèle de mouvement (P2) prédéfini.

2. Procédé selon la revendication 1, la première zone (11) prédéfinie présentant une distance (a) de l'unité d'utilisation (1), laquelle est supérieure à 1 mm, de préférence supérieure à 2 mm.

3. Procédé selon l'une quelconque des revendications précédentes, comprenant en outre les étapes de
- détection (300) d'un passage (P1) du moyen de saisie (2) depuis la première zone (11) à une deuxième zone (21) prédéfinie devant l'unité d'utilisation (1) et
- acquittement (400) du passage (P1) détecté par une deuxième sortie audio (4) prédéfinie.

4. Procédé selon l'une quelconque des revendications précédentes, la sortie audio (3, 4, 5) s'effectuant à l'aide d'un signal, lequel correspond à une unité de sens représentée sur l'unité d'utilisation (1).

5. Procédé selon l'une quelconque des revendications précédentes, la sortie audio (3, 4, 5) comprenant une des catégories de signaux suivantes :
- clic sonore d'une première fréquence,
- clic sonore d'une deuxième fréquence inférieure à la première fréquence,
- bip sonore,
- bruit de tonnerre,
- bruit de pluie,
- bruit de vent,
- séquence DTMF,
- tonalité,
- sorties vocales.

6. Procédé selon l'une quelconque des revendications précédentes, comprenant en outre l'étape de
- acquittement (200) de la présence détectée par une représentation optique alternative prédéfinie d'un bouton (10, 20, 30) représenté sur l'unité d'utilisation.

7. Interface utilisateur, en particulier interface homme-machine installée de manière fixe dans un véhicule automobile (8), comprenant :
- une unité d'utilisation (1) tactile,
- un dispositif de détection (6) pour la détection d'une entrée utilisateur et
- un dispositif de traitement (7),
l'interface utilisateur étant conçue pour exécuter un procédé selon l'une quelconque des revendications précédentes.

8. Interface utilisateur selon la revendication 7,
- l'unité d'utilisation (1) étant disposée au centre du tableau de bord d'un véhicule automobile (8) et/ou
- le dispositif de détection (6) comprenant un système de caméra et/ou un capteur capacitif.
